# EUROPEAN PATENT SPECIFICATION

(11) **EP 1 471 262 B1**
(45) Date of publication and mention of the grant of the patent: **27.12.2006**
(21) Application number: 04009322.1
(22) Date of filing: 20.04.2004
(51) Int. Cl.: F04D 29/66

(54) **Water pump**
Wasserpumpe
Pompe à eau

(30) Priority: 23.04.2003 JP 2003118747
(43) Date of publication of application: 27.10.2004
(73) Proprietor: AISIN SEIKI KABUSHIKI KAISHA, Kariya-shi, Aichi-ken 448-8650 (JP)
(72) Inventor: Koga, Yojiro, Kariya-shi Aichi-ken (JP); Katsumata, Akihiro, Handa-shi Aichi-ken (JP); Hashiguchi, Itsuro, Chiryu-shi Aichi-ken (JP); Hattori, Takumi, Chiryu-shi Aichi-ken (JP); Ozawa, Yasuo, Kariya-shi Aichi-ken (JP)
(74) Representative: Kramer - Barske - Schmidtchen

(56) References cited:
- EP-A- 1 188 931
- US-A- 4 966 572
- US-A1- 2002 176 773
- PATENT ABSTRACTS OF JAPAN vol. 010, no. 378 (M-546), 17 December 1986 (1986-12-17) & JP 61 169699 A (YAMADA SEISAKUSHO:KK), 31 July 1986 (1986-07-31)

## Description

### FIELD OF THE INVENTION

This invention generally relates to a water pump. More particularly, the present invention pertains to a water pump used for a vehicle.

### BACKGROUND OF THE INVENTION

A known example of a water pump, disclosed in the U.S. Patent No. 6,561,756, includes a pulley, a shaft including a hollow portion for rotating with the pulley as a unit, an impeller rotating with the shaft as a unit, a body including a supporting portion formed to cylindrical shape inserted by the shaft, a bearing provided between an external peripheral surface of the supporting portion and an internal peripheral surface of the pulley for rotatably supporting the pulley, and a mechanical seal sealing one side of a cylindrical space defined between an external peripheral surface of the shaft and an internal peripheral surface of the supporting portion.

In this composition, the mechanical seal of the water pump seals up cooling fluid in a fluid chamber and makes the fluid chamber and external separate. The mechanical seal having a rotation side member and a fixed side member. These members are relatively rotatably mounted each other keeping a fluid tight manner. According to this structure, the cooling fluid plays a lubrication role and the cooling fluid comes into between sliding surface of each the rotational side member and the fixed side member. If the sliding surface is formed to be smooth surface, sealing property thereof becomes to be improved, although lubricating property thereof becomes to be deteriorated. In this condition, the mechanical seal generates stick slip phenomenon and tends to be took place at the mechanical seal in which the mechanical seal rotates with vibrating. The vibration generated at the mechanical seal tends to be transmitted to the shaft and the pulley to cause noise.

JP 61169699 A discloses a water pump comprising a driven portion which is connected to an impeller by a solid shaft. A mechanical seal is provided between the shaft and a housing. To obtain a firm joint force between the shaft and the impeller by press molding, a boss part is formed into a truncated cone form and the truncated cone shaped boss part is press fitted through a spread-diameter-molding of the shaft.

EP 1 188 931 A2 which forms the preamble of claim 1 discloses a water pump comprising a driven portion and a shaft. The shaft includes a hollow portion and rotates with the driven portion as a unit, An impeller is provided which rotates with the shaft with a unit, A body including a cylindrical supporting portion is inserted by the shaft and a bearing is provided between the external peripheral surface of the supporting portion and an internal peripheral surface of the driven portion and rotatably supports the driven portion. A mechanical seal is provided between the hollow portion of the shaft and an internal peripheral surface of the supporting portion.

### SUMMARY OF THE INVENTION

In light of foregoing, according to an aspect of the present invention, a water pump includes a driven portion, a shaft including a hollow portion for rotating with the driven portion as a unit, an impeller rotating with the shaft as a unit, a body including a cylindrical supporting portion inserted by the shaft, a bearing provided between an external peripheral surface of the supporting portion and an internal peripheral surface of the driven portion for rotatably supporting the driven portion, and a mechanical seal sealing one side of a cylindrical space defined between an external peripheral surface of the shaft and an internal peripheral surface of the supporting portion, wherein a vibration absorption member is disposed in the hollow portion of the shaft.

It is a primary object of the present invention is to prevent a noise from generating at the mechanical seal arranged between the rotational side member and the fixed side member.

It is another object of the present invention is to prevent a vibration from generating at the mechanical seal arranged between the rotational side member and the fixed side member.

### BRIEF DESCRIPTION OF THE DRAWING FIGURES

The foregoing and additional features and characteristics of the present invention will become more apparent from the following detailed description considered with reference to the accompanying drawing figures wherein:

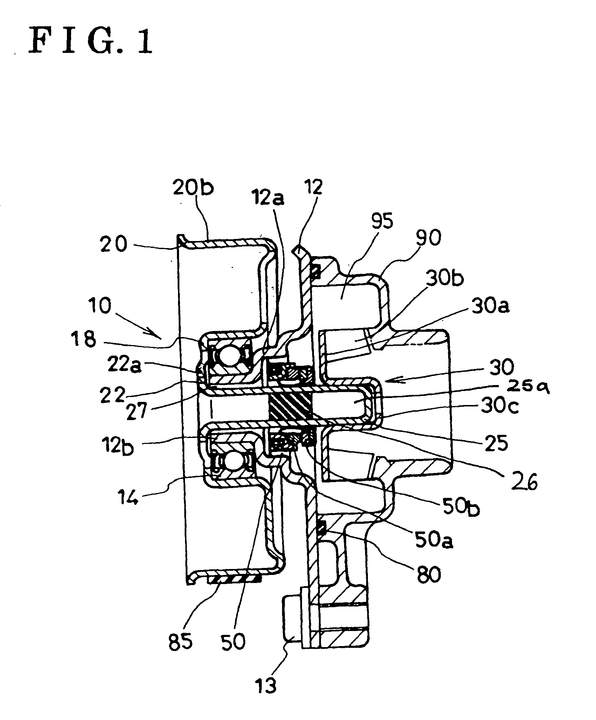

Fig. 1 is a cross-sectional view of a water pump according to an embodiment of the present invention.

### DETAILED DESCRIPTION OF THE INVENTION

A preferred embodiment of the present invention will be described hereinbelow in detail with reference to the accompanying drawings.

FIG. 1 is a cross-sectional view of a water pump 10 according to an embodiment. A body 12 of the water pump 10 is rigidly attached to an engine cylinder block 90 (or timing chain case and so on) using a fastening means 13 via a gasket 80 and so on. On the body 12, a cylindrical portion (supporting portion) is formed with stepwise diameter provided with a large diameter portion 12a and a small diameter portion 12b at right side and left side of FIG. 1, respectively. The large diameter portion is formed to have larger diameter than the small diameter portion. An inner race of a bearing 14 is fitted to be fixed to an external peripheral surface of the small diameter portion of the cylindrical portion. In addition, right side face of the inner race of the bearing 14 is adjacently placed to the large diameter portion 12a of the body 12. An interstice may be formed between the right side of the inner race and the large diameter portion 12a.

On an outer race of the bearing 14, a pulley 20 (driven portion) is rotatably attached as a unit. The pulley 20 is formed as an external peripheral portion of a rotational body 18 which has a cylindrical cup shape. To discharge fluid droplet got out from a mechanical seal 50, an opening portion 22a is formed at a bottom portion 22 of the rotational body 18 neighboring the external peripheral portion of the pulley 20 with equally angle. A shaft 25 is integrally disposed at the center of the bottom portion 22 of the rotational body 18 so as to be elongated in the direction to draw apart from the bottom portion 22 (right direction in FIG.1), and a pulley 20 side end of the shaft 25 is opened. At an end point of the shaft 25, bottom wall portion is formed to occlude there. The rotational body 18, integrally including the pulley 20, bottom portion 22 and shaft 25, are formed by pressing of plate material (such as a steel plate) to have same axis. Then, the pulley 20, bottom portion 22 and shaft 25 are plated or coated to give corrosion resistance.

An impeller 30 is rotatably provided at the occluded end point of the shaft 25. The impeller 30 includes a base portion 30a, a fin 30b formed to project from a rim portion of the base portion 30a and a hollow convex portion 30c projecting from the center portion of the base portion 30a to right direction in FIG. 1 as a unit. By fitting and attaching the hollow convex portion 30c to end point of the shaft 25, the shaft 25 and the impeller 30 are rotated integrally. By the way , the impeller 30 may be treated to give corrosion resistance after press forming of a plate material. In addition, the impeller 30 may be formed by resin material. The impeller 30 is disposed within the fluid chamber 95 which is formed in the engine cylinder block 90 and so on and of which an opening portion is occluded by the body 12. The fluid chamber 95 is a component of an engine cooling fluid circuit (not shown).

The mechanical seal 50 is provided at one side of a cylindrical space 27 (a boundary to the fluid chamber 95) defined between the external peripheral portion of the shaft 25 and internal peripheral portion of the large diameter portion 12a and the small diameter portion 12b of the body 12. To prevent getting out of cooling fluid to outside, the mechanical seal 50 isolates the fluid chamber 95 from outside in watertight condition. The mechanical seal 50 is made up of a fixed ring 50a rigidly attached to internal peripheral side of the large diameter portion 12a of the body 12 and a rotational ring 50b rigidly attached to the shaft 25 with contacting to the fixed ring 50a. The fixed ring 50a and the rotational ring 50b relatively rotate with contacting each other to keep watertight condition.

A hollow portion 25a is formed at inferior side of the shaft 25. In the hollow portion 25a, a vibration absorption member 26 is provided. The vibration absorption member 26 is made of an elastic material, and formed by pushing of the elastic material having a predetermined size into the hollow portion 25a of the shaft from an opening portion thereof. The vibration absorption member may be formed by injection molding of softened elastic material into the hollow portion of the shaft from an opening portion thereof. The vibration absorption member 26 may be formed to have arbitrary length. In addition, the vibration absorption member 26 may have pores in its body. In addition, the vibration absorption member 26 may be made of rubber or polymer foam as an example of the elastic material.

Next, operation and function of the embodiment will be explained hereinafter.

The pulley 20 is rotated by a rotational force transmitted from an output of an engine (not shown) via a belt 85 engaged to a belt engaging face 20b of the pulley 20. With rotation of the pulley 20, the shaft 25 attached to the pulley 20 as a unit is also cooperatively rotated in the same direction. Then, the impeller 30 integrally attached to the shaft 25 is rotated in the fluid chamber 95 occluded by the body 12.

As the cooling fluid is filled in the fluid chamber 95, the impeller 30 pushes the cooling fluid presented near the center of the fluid chamber 95 in outer direction of the impeller 30 according to centrifugal force generated by rotation of the impeller 30. Pumping action is conducted by centrifugal force from the center of the impeller 30 to outer side. Accordingly, a pressure difference between the rotational center of the impeller 30 and the outer side is took place in the fluid chamber 95, and then, the cooling fluid is sucked into the fluid chamber 95 from a port 95a which is disposed close to the rotational center of the impeller 30. Then, the cooling fluid is pushed to outer side by pumping action of the impeller 30, and delivered to each cooled portion in the engine from a discharge opening (not shown). In this manner, the cooling fluid is circulated.

In this situation, for the mechanical seal 50, the fixed ring (fixed side member) 50a and the rotational ring (rotational side member) 50b slide each other. At this time, the cooling fluid plays a lubrication role for the cooling fluid comes into the sliding portion in which the sliding surfaces of the fixed ring 50a and the rotational ring 50b slide each other. If the sliding surface is formed to be smooth surface, sealing property thereof becomes to be improved, although lubricating property thereof becomes to be deteriorated. In this condition, the mechanical seal 50 generates stick slip phenomenon and rotates with vibrating. The vibration generated at the mechanical seal 50 tends to be transmitted to the shaft 25 and the pulley 20 to cause noise.

Although, for the embodiment of the present invention, the vibration generated at the mechanical seal 50 may be absorbed by the vibration absorption member 26 provided in the hollow portion 25a. Thus, transmission of the vibration to the shaft 25 and the pulley 20 becomes low, and noise generation may be prevented.

The principles, a preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention as defined by the appended claims. Accordingly, it is expressly intended that all such variations, changes and equivalents which fall within the spirit scope of the present invention as defined in the claims, be embraced thereby.

## Claims

1. A water pump comprising:
a driven portion (20);
a shaft (25) including a hollow portion (25a) for rotating with the driven portion (20) as a unit; an impeller (30) rotating with the shaft (25) as a unit;
a body (12) including a cylindrical supporting portion (12a, 12b) inserted by the shaft (25);
a bearing (14) provided between an external peripheral surface of the supporting portion (12b) and an internal peripheral surface of the driven portion (20) for rotatably supporting the driven portion (20); and
a mechanical seal (50) sealing one side of a cylindrical space (27) defined between an external peripheral surface of the shaft (25) and an internal peripheral surface of the supporting portion (12b);
**characterized in that**
a vibration absorption member (26) is disposed in the hollow portion (25a) of the shaft (25).

2. A water pump according to claim 1, wherein the vibration absorption member (26) is made of an elastic material.

3. A water pump according to claim 1 or 2, wherein the vibration absorption member (26) includes pores in its body.

4. A water pump according to one of claims 1 to 3, wherein the vibration absorption member having a predetermined size is pushed to place it into the hollow portion of the shaft from an opening portion thereof.

5. A water pump according to one of claims 1 to 4 wherein the vibration absorption member is formed by injection molding of softened elastic material into the hollow portion of the shaft from an opening portion thereof.

## Patentansprüche

1. Wasserpumpe, enthaltend:
einen angetriebenen Bereich (20);
eine Welle (25), welche einen hohlen Bereich (25a) zur Drehung mit dem angetriebenen Bereich (20) als Einheit enthält;
ein Flügelrad (30), das sich mit der Welle (25) als Einheit dreht;
einen Körper (12), der einen zylindrischen Stützbereich (12a, 12b), der durch die Welle (25) eingeführt ist, enthält;
ein Lager (14), das zwischen einer externen Umfangsoberfläche des Stützbereichs (12b) und einer internen Umfangsoberfläche des angetriebenen Bereichs (20) zum drehbaren Stützen des angetriebenen Bereichs (20) vorgesehen ist; und
eine mechanische Dichtung (50), die eine Seite eines zylindrischen Raums (27) dichtet, der zwischen einer externen Umfangsoberfläche des Schafts (25) und einer internen Umfangsoberfläche des Stützbereichs (12b) definiert ist;
**dadurch gekennzeichnet, dass**
ein Vibrationsabsorptionselement (26) in dem hohlen Bereich (25a) der Welle (25) vorgesehen ist.

2. Wasserpumpe nach Anspruch 1, wobei das Vibrationsabsorptionselement (26) aus einem elastischen Material gebildet ist.

3. Wasserpumpe nach Anspruch 1 oder 2, wobei das Vibrationsabsorptionselement (26) Poren in seinem Körper enthält.

4. Wasserpumpe nach einem der Ansprüche 1 bis 3, wobei das Vibrationsabsorptionselement, das eine vorgegebene Größe aufweist, gedrückt ist, um es in den hohlen Bereich der Welle von einem Öffnungsbereich der Welle zu drücken.

5. Wasserpumpe nach einem der Ansprüche 1 bis 4, wobei das Vibrationsabsorptionselement durch Spritzguss von erweichtem elastischem Material in den hohlen Bereich der Welle von einem Öffnungsbereich davon geformt ist.

## Revendications

1. Pompe à eau comprenant :
une partie menée (20);
un arbre (25) incluant une partie creuse (25a) pour tourner avec la partie menée (20) comme une unité ;
une hélice (30) tournant avec l'arbre (25) comme une unité ;
un corps (12) incluant une partie de support cylindrique (12a, 12b) insérée par l'arbre (25) ;
un palier (14) disposé entre une surface périphérique externe de la partie de support (12b) et une surface périphérique interne de la partie menée (20) pour supporter avec faculté de rotation la partie menée (20) ; et
un joint d'étanchéité mécanique (50) scellant un côté d'un espace cylindrique (27) défini entre une surface périphérique externe de l'arbre (25) et une surface périphérique interne de la partie de support (12b) ;
**caractérisée en ce que**
un élément d'absorption des vibrations (26) est disposé dans la partie creuse (25a) de l'arbre (25).

2. Pompe à eau selon la revendication 1, dans laquelle l'élément d'absorption des vibrations (26) est constitué d'un matériau élastique.

3. Pompe à eau selon la revendication 1 ou 2, dans laquelle l'élément d'absorption des vibrations (26) inclut des pores dans son corps.

4. Pompe à eau selon l'une quelconque des revendications 1 à 3, dans laquelle l'élément d'absorption des vibrations ayant une dimension prédéterminée est poussé pour se placer dans la partie creuse depuis sa partie d'ouverture.

5. Pompe à eau selon l'une quelconque des revendications 1 à 4, dans laquelle l'élément d'absorption des vibrations est formé par moulage par injection d'un matériau élastique ramolli dans la partie creuse de l'arbre depuis sa partie d'ouverture.
